# FASCICULE DE BREVET EUROPEEN

(11) **EP 1 320 160 B1**
(45) Date de publication et mention de la délivrance du brevet: **29.04.2015**
(21) Numéro de dépôt: 02292991.3
(22) Date de dépôt: 04.12.2002
(51) Int. Cl.: H02G 3/04

(54) **Goulotte électrique à moyens de retenue de câbles ou de conducteurs électriques**
Elektrischer Kabelkanal mit Haltevorrichtung für Kabel oder elektrische Leiter
Electrical duct with retaining means for cables or wiring

(30) Priorité: 14.12.2001 FR 0116222
(43) Date de publication de la demande: 18.06.2003
(73) Titulaire: PLANET WATTOHM, 60300 Senlis (FR)
(72) Inventeur: Popescu, Dragos, 93110 Rosny-sous-Bois (FR); Marcou, Jean-Claude, 87000 Limoges (FR); Laigle, Jean, 93700 Drancy (FR)
(74) Mandataire: Santarelli

(56) Documents cités:
- EP-A- 1 160 949
- WO-A-01/08280
- CH-A- 368 844
- DE-U- 1 852 065
- DE-U- 8 412 625
- US-A- 4 094 561

## Description

La présente invention concerne d'une manière générale les goulottes électriques du type de celles mises en oeuvre, par exemple, pour le support, le logement et la protection de divers appareillages électriques, aussi bien que pour le support, le logement et la protection des câbles ou conducteurs électriques nécessaires à la desserte de ces appareillages.

Elle concerne préférentiellement les goulottes électriques dites "de distribution" qui courent dans les sous-sols et les parties communes des bâtiments et qui font office de chemins de câbles en étant chargées au maximum en câbles ou conducteurs électriques.

De telles goulottes électriques comprennent un socle pourvu d'une ouverture longitudinale définie entre les bords de deux ailes latérales longitudinales ou d'une aile latérale et d'une cloison de séparation ou encore de deux cloisons de séparation qui s'élèvent à partir d'un fond, des moyens de retenue de câbles ou de conducteurs électriques positionnés à l'intérieur dudit socle, et un couvercle de fermeture destiné à être monté sur le socle en recouvrant lesdits moyens de retenue pour fermer chaque ouverture longitudinale.

Certaines goulottes électriques déjà connues comprennent, dans les retours en équerre des ailes latérales longitudinales de leur socle, des découpes formant localement des doigts de retenue rigides qui s'avancent dans l'ouverture longitudinale dudit socle, transversalement à son axe longitudinal.

Ces doigts de retenue rigides font office de moyens de retenue de câbles ou de conducteurs électriques.

L'inconvénient principal de ces doigts de retenue rigides est que leurs bords forment des arêtes coupantes pouvant blesser les doigts de l'installateur qui introduit les câbles ou les conducteurs électriques à l'intérieur du socle de la goulotte.

En outre, ces doigts de retenue rigides présentent une longueur relativement courte et, une fois que le remplissage du socle en câbles ou conducteurs dépasse le niveau des extrémités desdits doigts, ceux-ci ne font plus office de moyens de retenue pour les câbles ou conducteurs électriques rajoutés ultérieurement dans le socle de la goulotte.

En outre, pour les socles de goulotte de plus grande section, il est connu généralement d'utiliser, en tant que moyens de retenue de câbles, des agrafes réparties le long du socle de la goulotte. Ces agrafes se présentent sous la forme de barrettes dont les extrémités sont pourvues de moyens d'accrochage sur les retours en équerre des ailes latérales longitudinales du socle de la goulotte.

Certaines agrafes s'accrochent sur les deux retours en équerre desdites ailes latérales, d'autres s'accrochent seulement sur le retour en équerre d'une aile latérale du socle de la goulotte.

Une fois accrochées, lesdites agrafes s'étendent transversalement à l'axe longitudinal du socle de la goulotte en formant localement un pont entre les retours en équerre des ailes latérales longitudinales de celui-ci.

De manière classique, lors de la phase de mise en place des câbles ou des conducteurs électriques à l'intérieur du socle de la goulotte, ces agrafes sont généralement fixées par une seule extrémité à un retour en équerre d'une aile latérale dudit socle. Puis, après que le socle de la goulotte ait été totalement rempli de câbles ou de conducteurs électriques, l'autre extrémité de chaque agrafe est fixée à l'autre retour en équerre de l'autre aile latérale du socle de la goulotte.

L'inconvénient principal d'une telle solution est que, pendant la phase de câblage, l'installateur doit actionner chacune des agrafes pour l'écarter de l'ouverture longitudinale du socle de la goulotte afin de pourvoir introduire les câbles ou conducteurs électriques à l'intérieur de celui-ci.

Lors de l'actionnement des agrafes, il se peut que certaines agrafes se détachent du retour en équerre de l'aile latérale auquel elles sont raccrochées. L'actionnement successif des différentes agrafes ralentit l'installateur dans son opération de câblage du socle de la goulotte.

En outre, durant la phase de câblage, ces agrafes sont peu efficaces et l'installateur peut rencontrer des problèmes de maintien des câbles ou des conducteurs électriques à l'intérieur du socle de la goulotte, surtout en fin d'opération de câblage lorsque le socle de la goulotte est pratiquement rempli de câbles ou de conducteurs électriques.

Enfin, on connaît des documents WO 01/08280, EP 1 160 949, DE 84 12 625 et DE 18 52 065 des conduits de câblage dont le couvercle de fermeture intégré ou rapporté sur le socle présente une certaine flexibilité pour permettre d'accéder à l'intérieur du socle une fois que celui-ci est fermé afin par exemple d'y introduire un câble ou un conducteur supplémentaire.

Le document CH-A-368844 décrit un conduit de câblage comportant une succession de brides enserrant les câbles comme moyens de retenue et un couvercle recouvrant les moyens de retenue.

Ces conduits de câblage ne comportent pas de moyens de retenue de câbles distincts des éléments de fermeture partielle ou totale du socle.

En conséquence, la sécurité de tels conduits de câblage n'est pas parfaite puisque ces conduits donnent accès à l'intérieur du socle une fois chargé en câbles.

Afin de résoudre les inconvénients précités des goulottes électriques déjà connues, la présente invention propose une nouvelle goulotte électrique telle que définie en introduction, caractérisée en ce que lesdits moyens de retenue comprennent au moins une paroi souple, qui court le long du bord d'une desdites ailes latérales ou d'une cloison de séparation du socle, et qui s'étend au moins en partie sensiblement parallèlement au fond dudit socle en direction de l'autre aile latérale ou de l'autre cloison de séparation pour couvrir au moins partiellement chaque ouverture longitudinale du socle.

Ainsi, selon l'invention, lorsque la goulotte est ouverte, chaque paroi souple formant les moyens de retenue de câbles retient les câbles insérés dans ledit socle tout en permettant à un usager d'introduire d'autres câbles aisément à l'intérieur du socle et lorsque la goulotte est fermée par son couvercle de fermeture, la sécurité d'accès est garantie par ce dernier superposé auxdits moyens de retenue.

D'autres caractéristiques non limitatives et avantageuses de la goulotte électrique selon l'invention sont les suivantes :
- chaque paroi souple est continue le long du bord de l'aile latérale ou de la cloison de séparation correspondante dudit socle ;
- chaque paroi souple est interrompue à des endroits répartis le long du bord de l'aile latérale ou de la cloison de séparation correspondante dudit socle ;
- chaque paroi souple présente un bord libre qui suit un trajet sinusoïdal ;
- chaque paroi souple présente un bord libre qui suit un trajet rectiligne ;
- chaque paroi souple présente un bord libre recourbé vers l'intérieur du socle pour former un crochet longitudinal ;
- chaque paroi souple présente un bord libre qui suit un trajet en créneaux ;
- le socle comprend au moins une cloison de séparation qui porte, le long de deux bords parallèles, deux parois souples qui s'étendent sensiblement parallèlement au fond du socle dans des directions opposées l'une de l'autre ;
- chaque paroi souple est rattachée à un retour en équerre de l'aile latérale ou de la cloison de séparation correspondante dudit socle et s'étend pratiquement entièrement parallèlement au fond du socle ;
- l'aile latérale ou la cloison de séparation correspondante dudit socle étant exempte de retour en équerre et se terminant par un bord d'extrémité libre droit, chaque paroi souple est rattachée audit bord d'extrémité libre droit ;
- chaque paroi souple présente un profil en angle droit avec une première partie s'étendant dans le prolongement de ladite aile latérale ou de ladite cloison de séparation et une deuxième partie s'étendant à l'équerre de ladite première partie parallèlement au fond du socle ;
- les moyens de retenue comprennent deux parois souples en regard, chacune courant le long du bord d'une desdites ailes latérales du socle et s'étendant au moins en partie sensiblement parallèlement au fond dudit socle en direction de l'autre paroi souple pour couvrir partiellement ladite ouverture longitudinale du socle, un interstice étant prévu entre les deux bords libres desdites parois souples ;
- les deux parois souples sont identiques ;
- les deux parois souples sont différentes ;
- chaque paroi souple vient de formation par moulage avec le socle ;
- chaque paroi souple et le socle sont réalisés d'un seul tenant par co-extrusion d'une matière rigide constituant le socle et d'une matière souple constituant chaque paroi souple ;
- chaque paroi souple est rapportée sur le bord de l'aile latérale ou de la cloison de séparation correspondante du socle par l'intermédiaire de moyens de montage mécanique ;
- chaque paroi souple est rapportée par encliquetage sur le bord de l'aile latérale ou de la cloison de séparation correspondante du socle ;
- chaque paroi souple est rapportée par emmanchement sur le bord de l'aile latérale ou de la cloison de séparation correspondante du socle ;
- chaque paroi souple est rapportée par collage sur le bord de l'aile latérale ou de la cloison de séparation correspondante du socle ;
- chaque paroi souple est soudée au bord de l'aile latérale ou de la cloison de séparation correspondante du socle ;
- chaque paroi souple et le socle sont réalisés par moulage d'une matière rigide, la souplesse de chaque paroi souple étant obtenue par découpage de celle-ci en une pluralité de languettes juxtaposées selon la direction longitudinale de ladite paroi souple ;
- chaque paroi souple est réalisée en une matière souple du type PVC souple ou élastomère synthétique ou naturel ;
- chaque paroi souple est réalisée en matière transparente ; et
- chaque paroi souple comporte, sur son bord libre, des moyens d'accrochage sur le bord de l'autre aile latérale longitudinale ou de l'autre cloison de séparation du socle pour être verrouillée.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique partielle en perspective d'un socle d'un premier mode de réalisation de la goulotte électrique selon l'invention ;
- la figure 2 est une vue schématique partielle en perspective d'un socle d'un deuxième mode de réalisation de la goulotte électrique selon l'invention ;
- la figure 3 est une vue schématique partielle en perspective d'un socle d'un troisième mode de réalisation de la goulotte électrique selon l'invention ;
- la figure 4 est une vue schématique partielle en perspective d'un socle d'un quatrième mode de réalisation de la goulotte électrique selon l'invention ;
- la figure 5 est une vue schématique partielle en perspective d'un socle d'un cinquième mode de réalisation de la goulotte électrique selon l'invention ;
- la figure 6 est une vue schématique partielle en perspective d'un socle d'un sixième mode de réalisation de la goulotte électrique selon l'invention ;
- la figure 7 est une vue schématique partielle en perspective d'un socle d'un septième mode de réalisation de la goulotte électrique selon l'invention ;
- la figure 8 est une vue schématique partielle en perspective d'un socle d'un huitième mode de réalisation de la goulotte électrique selon l'invention ;
- la figure 9 est une vue schématique partielle en perspective d'un socle d'un neuvième mode de réalisation de la goulotte électrique selon l'invention ;
- la figure 10 est une vue schématique partielle en perspective d'un socle d'un dixième mode de réalisation de la goulotte électrique selon l'invention ;
- la figure 11 est une vue schématique partielle en perspective d'un socle d'un onzième mode de réalisation de la goulotte électrique selon l'invention ;
- la figure 12 est une vue en bout du socle représenté sur la figure 11 fermé par un couvercle ;
- la figure 13 est une vue schématique partielle en perspective d'un socle d'un douzième mode de réalisation de la goulotte électrique selon l'invention ; et
- la figure 14 est une vue schématique partielle en perspective d'un socle d'un treizième mode de réalisation de la goulotte électrique selon l'invention.

En préliminaire, on notera que les éléments identiques ou similaires des différents modes de réalisation représentés sur les différentes figures seront, dans la mesure du possible, référencés par les mêmes signes de référence et ne seront pas décrits à chaque fois.

Sur les figures on a représenté différents modes de réalisation d'une goulotte électrique qui comprend un socle 10, ici à section en U, avec un fond 11 à partir duquel s'élèvent deux ailes latérales longitudinales 12, 13 perpendiculairement audit fond.

Bien entendu, selon d'autres variantes, on pourrait prévoir que le socle présente une section en V avec les deux ailes latérales longitudinales qui divergent à partir du fond ou toutes autres formes de section.

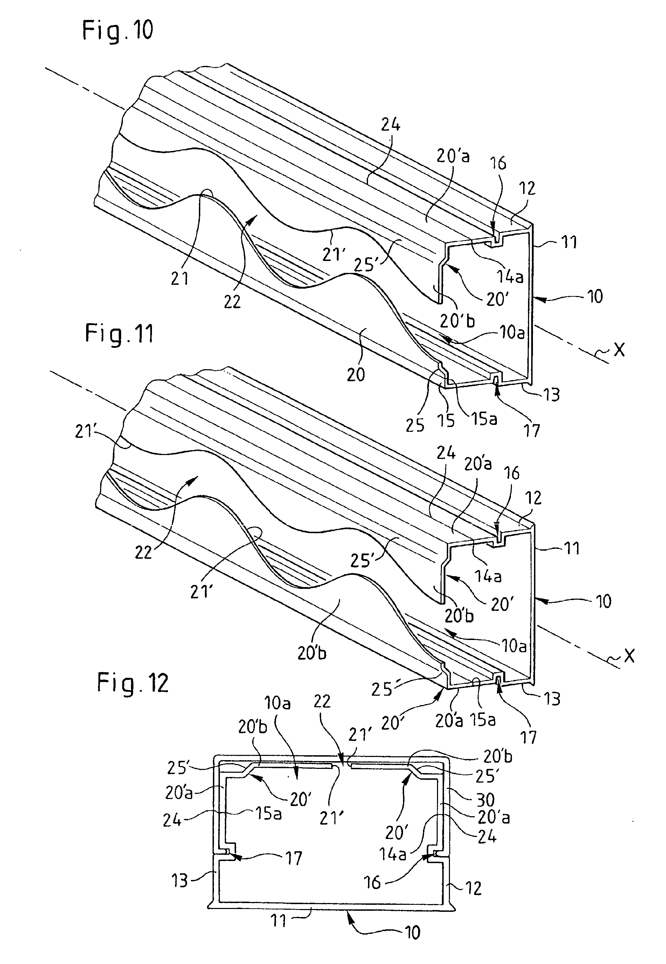

Entre les bords 14a, 15a des deux ailes latérales longitudinales 12, 13 est définie au moins une ouverture longitudinale 10a du socle 10, allongée selon l'axe X. Cette ouverture longitudinale 10a est destinée à être fermée par un couvercle de fermeture 30 (voir figure 12).

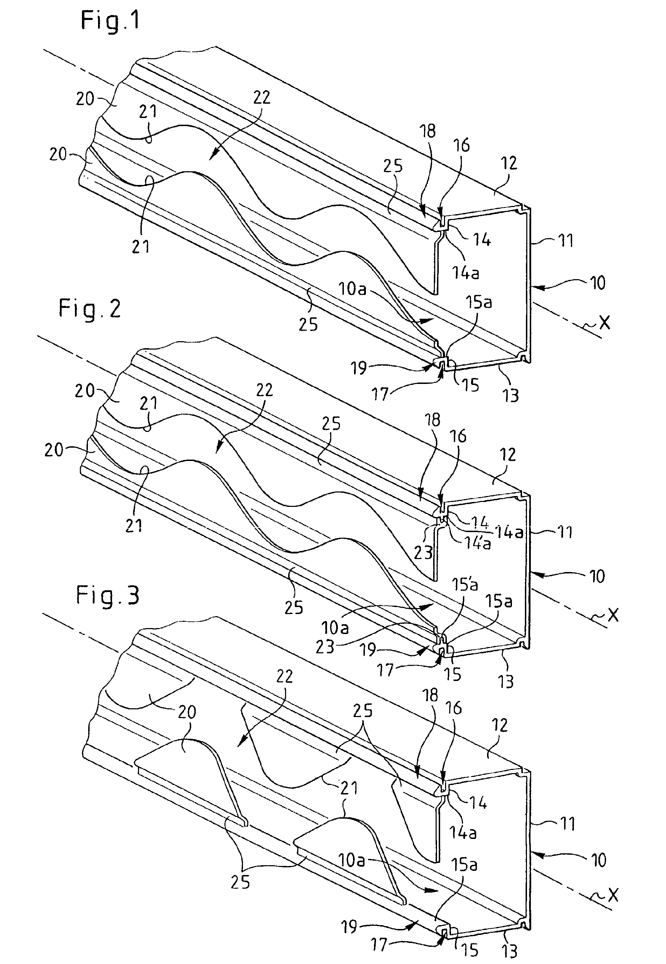

Selon les modes de réalisation de la goulotte électrique représentés sur les figures 1 à 9, 13 et 14, les ailes latérales longitudinales 12, 13 du socle 10 comportent en tête des retours en équerre 14, 15 dirigés l'un vers l'autre.

Selon les modes de réalisation représentés sur les figures 1 à 9, ces retours en équerre 14, 15, définissent chacun une gorge longitudinale 16, 17, qui s'étend selon l'axe X sur toute la longueur de l'aile latérale longitudinale 12, 13 correspondante, et qui s'ouvre vers l'extérieur du socle 10. Chaque gorge longitudinale 16, 17 est surmontée d'un bourrelet longitudinal 18, 19. Les bourrelets longitudinaux 18, 19 et les gorges longitudinales 16, 17 associées servent à l'encliquetage du couvercle de fermeture sur le socle 10.

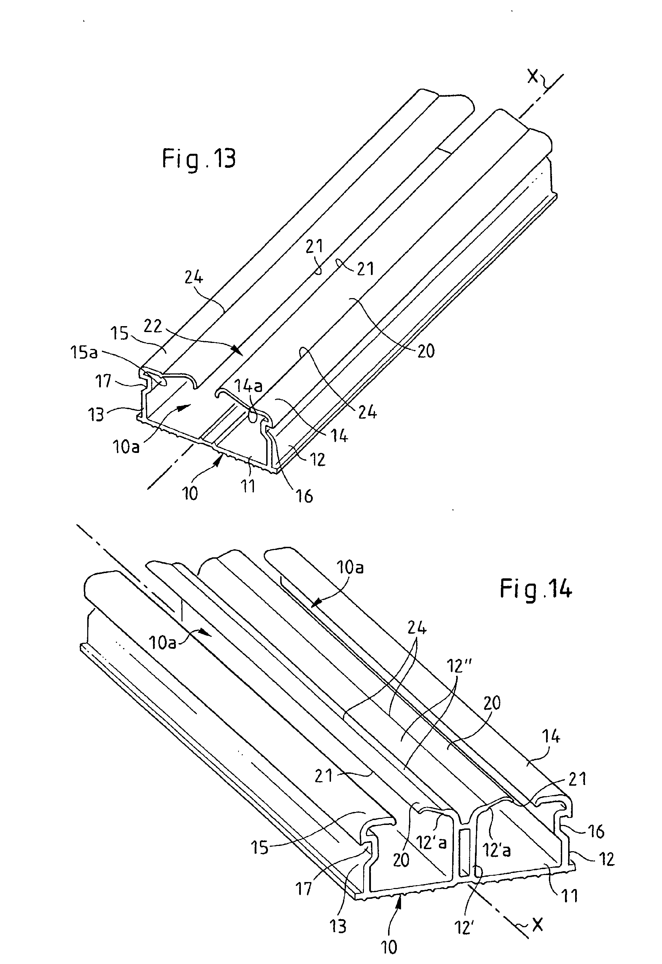

Selon les modes de réalisation représentés sur les figures 13 et 14, les moyens de montage du couvercle de fermeture 30 comprennent sur le socle 10 une gorge longitudinale 16, 17 prévue en renfoncement de la face externe de chaque aile latérale longitudinale 12, 13.

Ici, le couvercle de fermeture du socle 10 est recouvrant, c'est-à-dire qu'il recouvre en partie les faces externes des ailes latérales longitudinales 12, 13 de celui-ci.

Selon le mode de réalisation représenté sur les figures 10 à 12, les ailes latérales longitudinales 12, 13 du socle 10 de la goulotte électrique sont exemptes de retour en équerre et se terminent par un bord d'extrémité libre droit 14a, 15a qui s'étend selon l'axe X du socle 10.

Selon le mode de réalisation du socle 10 représenté sur les figures 10 à 12, les moyens de montage du couvercle de fermeture 30 comprennent également sur le socle 10 une gorge longitudinale 16, 17 prévue en renfoncement de la face externe de chaque aile latérale longitudinale 12, 13.

Dans ces gorges longitudinales 16, 17 s'engagent des languettes longitudinales du couvercle de fermeture 30 correspondant (voir figure 12) de sorte que le couvercle de fermeture 30 recouvre également une partie de la face externe des ailes latérales longitudinales 12, 13 du socle 10 de la goulotte électrique.

Selon le mode de réalisation du socle 10 représenté sur la figure 14, il est prévu une cloison de séparation 12' qui s'élève à partir du fond 11 du socle 10 pour partager son volume intérieur en deux compartiments distincts. Cette cloison de séparation 12' porte en tête deux retours en équerre 12" qui s'étendent dans des directions opposées. Ce socle 10 comporte alors deux ouvertures longitudinales 10a allongées selon l'axe X, une par compartiment.

En outre, la goulotte électrique représentée sur les figures comporte des moyens de retenue de câbles ou de conducteurs électriques (non représentés) positionnés à l'intérieur du socle 10.

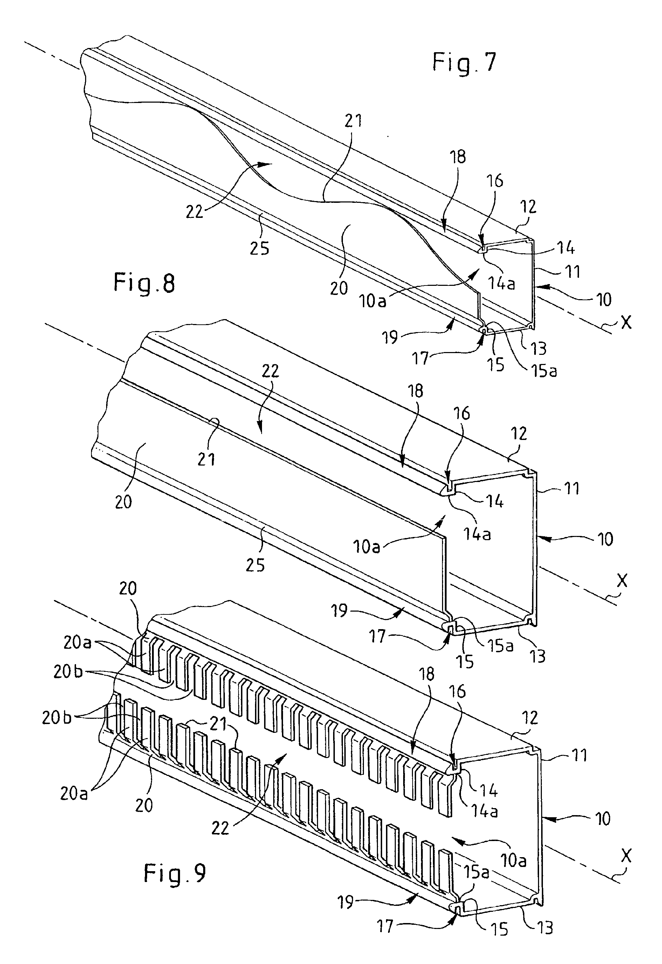

Selon les modes de réalisation représentés sur les figures 7 et 8, avantageusement, ces moyens de retenue comprennent une paroi souple 20, qui court le long du bord 15a d'une desdites ailes latérales longitudinales 13 du socle 10, et qui s'étend au moins en partie sensiblement parallèlement au fond 11 dudit socle 10 en direction de l'autre aile latérale longitudinale 12 pour couvrir partiellement ladite ouverture longitudinale 10a du socle 10.

Comme le montrent les figures 7 et 8, chaque paroi souple 20 est rattachée à un retour en équerre 15 de l'aile latérale longitudinale 13 correspondante du socle 10 et s'étend pratiquement entièrement parallèlement au fond 11 du socle.

Chaque paroi souple 20 est sensiblement plane avec à sa base un décrochement 25 qui se raccorde au retour en équerre 15 correspondant.

Ce décrochement 25 est avantageux du fait qu'il permet de surélever chaque paroi souple 20 au-dessus du plan de l'ouverture longitudinale 10a du socle 10, ce qui permet d'augmenter la capacité de câblage dudit socle 10. En effet, l'installateur peut engager dans ce socle quelques câbles ou conducteurs électriques au-dessus du seuil de chargement du socle défini par le plan de son ouverture longitudinale 10a, ces câbles ou conducteurs électriques étant maintenus en place par lesdites parois souples 20.

Comme le montrent les figures 7 et 8, chaque paroi souple 20 est continue le long du bord 15a de l'aile latérale longitudinale 13 correspondante du socle 10.

Selon le mode de réalisation représenté sur la figure 7, la paroi souple 20 présente un bord libre 21 qui suit un trajet sinusoïdal dont les sommets arrivent à effleurement de l'autre bord 14a de l'autre aile latérale longitudinale 12 et dont les creux sont situés à distance de cet autre bord 14a de sorte qu'il y a un interstice 22 entre le bord libre 21 de la paroi souple 20 et le bord 14a de l'autre aile latérale longitudinale 12. Cet interstice 22 permet le chargement des câbles ou conducteurs électriques dans le socle 10 de la goulotte électrique.

Selon le mode de réalisation représenté sur la figure 8, le bord libre 21 de la paroi souple 20 suit un trajet rectiligne et est situé à distance de l'autre bord 14a de l'autre aile latérale longitudinale 12 du socle de sorte qu'il est prévu un interstice 22 entre la paroi souple 20 et l'autre aile latérale longitudinale 12 permettant le chargement des câbles ou conducteurs électriques à l'intérieur du socle 10 de la goulotte électrique.

Dans le même ordre d'idée que les modes de réalisation représentés sur les figures 7 et 8, selon le mode de réalisation de la figure 14, ces moyens de retenue comprennent une paroi souple 20 par compartiment du socle 10, chaque compartiment étant défini entre la cloison de séparation 12' et une aile latérale longitudinale 12, 13.

Chaque paroi souple 20 court le long d'un bord 12'a de ladite cloison de séparation 12' et s'étend à partir d'un retour en équerre 12" sensiblement parallèlement au fond 11 du socle en direction de l'aile latérale longitudinale 12, 13 correspondante de manière à couvrir au moins partiellement chaque ouverture longitudinale 10a.

Dans ce cas, les deux parois souples 20 s'étendent dans des directions opposées l'une de l'autre.

Le bord libre 21 de chaque paroi souple 20 suit ici un trajet rectiligne en étant légèrement recourbé vers l'intérieur du socle 10 pour former un crochet longitudinal améliorant la capacité à retenir les câbles introduits dans chaque compartiment du socle 10.

Ici aussi, chaque paroi souple 20 est continue le long du bord 12'a de la cloison de séparation 12'.

Selon le mode de réalisation représenté sur les figures 1 à 6 et 13, les moyens de retenue de la goulotte électrique comprennent deux parois souples 20 en regard, chacune courant le long d'un bord 14a, 15a d'une desdites ailes latérales longitudinales 12, 13 du socle 10 et s'étendant au moins en partie sensiblement parallèlement au fond 11 dudit socle en direction de l'autre paroi souple 20 pour couvrir partiellement ladite ouverture longitudinale 10a du socle 10, un interstice 22 étant prévu entre les deux bords libres 21 desdites parois souples 20 pour permettre le chargement au travers de cet interstice 22 des câbles ou conducteurs électriques à l'intérieur du socle 10 de la goulotte électrique.

Chacune des parois souples 20 des socles 10 représentés sur les figures 1 et 2 est similaire à la paroi souple du socle 10 représenté sur la figure 7. Chaque paroi souple 20 comporte, à proximité de l'aile latérale longitudinale 12, 13 à laquelle elle est rattachée, un décrochement 25 permettant d'être légèrement surélevée au-dessus du plan de l'ouverture longitudinale 10a du socle 10, sinon, pour une majeure partie, elle s'étend parallèlement au fond 11 du socle 10.

Les bords libres des parois souples 20 représentées sur les figures 1 et 2 présentent également un trajet sinusoïdal de sorte que l'interstice 22 défini entre les deux parois souples 20 identiques suit un trajet sinueux de largeur sensiblement constante.

Les parois souples 20 représentées sur les figures 1 et 2 sont également continues le long du bord 14a, 15a de l'aile latérale longitudinale 12, 13 correspondante dudit socle 10.

Selon le mode de réalisation représenté sur la figure 3, chaque paroi souple 20 est interrompue à des endroits répartis régulièrement le long du bord 14a, 15a de l'aile latérale longitudinale 12, 13 correspondante du socle 10.

Ainsi, entre deux morceaux successifs de chaque paroi souple 20, il est prévu une partie rigide constituée par le retour en équerre 14, 15 correspondant de l'aile latérale longitudinale 12, 13 du socle 10. Chaque morceau de chaque paroi souple 20 présente un profil identique au profil des parois souples 20 représentées sur les figures 1, 2 et 7 avec un bord libre arrondi suivant une portion de sinusoïde et un décrochement 25 rattaché au bord 14a, 15a de l'aile latérale longitudinale 12, 13 correspondante et une partie plane s'étendant parallèlement au fond 11 du socle 10.

Bien entendu, en variante, il est possible d'avoir une seule paroi souple morcelée sur un bord d'une seule aile latérale longitudinale du socle de la goulotte et rien sur l'autre aile latérale.

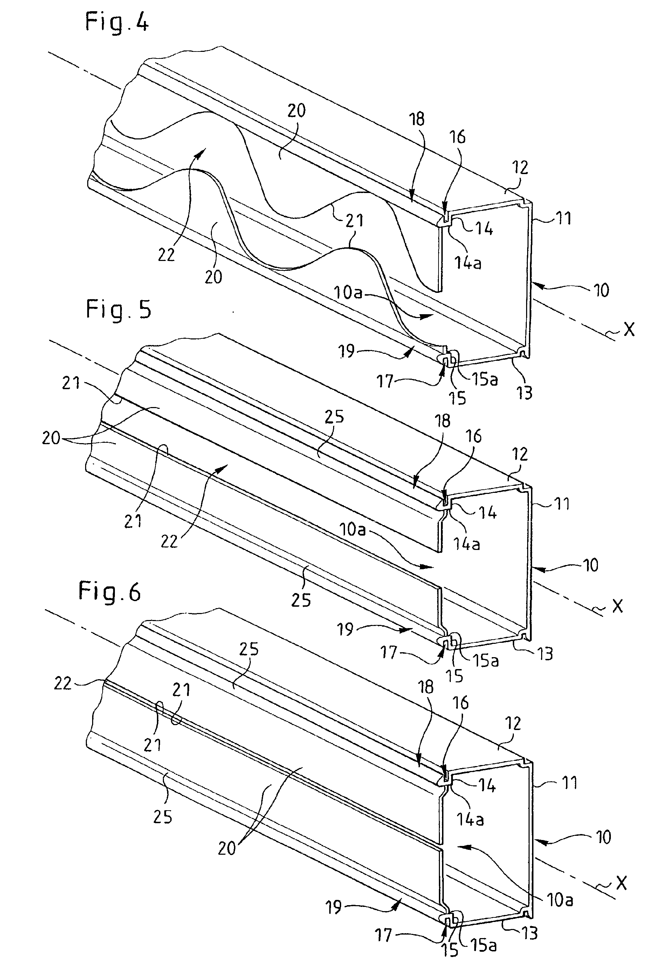

Selon le mode de réalisation représenté sur la figure 4, chaque paroi souple 20 en regard présente un bord libre 21 qui suit un trajet sinusoïdal plus accentué que le bord libre de la paroi souple représentée sur la figure 7 de telle sorte qu'ici ledit bord libre 21 vient, à chaque creux, tangent au bord 14a, 15a de l'aile latérale longitudinale 12, 13 correspondante du socle 10.

Selon le mode de réalisation représenté sur les figures 5, 6 et 13, chaque paroi souple 20 en regard présente un bord libre 21 qui suit un trajet rectiligne, la largeur des parois souples 20 représentées sur la figure 5 étant inférieure à la largeur des parois souples 20 représentées sur la figure 6.

Selon le mode de réalisation représenté sur la figure 5, l'interstice 22 prévu entre les deux bords libres 21 des deux parois souples présente une certaine largeur alors que, selon le mode de réalisation représenté sur la figure 6, les bords libres 21 des deux parois souples 20 en regard sont pratiquement jointifs.

Pour charger en câbles ou conducteurs électriques un socle 10 muni de parois souples 20 dont les bords libres 21 sont pratiquement jointifs, il est donc nécessaire que les parois souples 20 présentent une grande souplesse supérieure à celle des parois souples 20 représentées sur la figure 5.

Selon le mode de réalisation représenté sur les figure 13 et 14, chaque bord libre 21 de chaque paroi souple 20 est recourbé vers l'intérieur du socle 10 pour former un crochet longitudinal améliorant la capacité à retenir les câbles à l'intérieur du socle 10.

Sur les figures 11 et 12, on a représenté un autre mode de réalisation du socle 10 de la goulotte électrique conforme à l'invention. Selon ce mode de réalisation, les ailes latérales longitudinales 12, 13 du socle 10 sont exemptes de retour en équerre et se terminent par un bord d'extrémité libre droit 14a, 15a. Une paroi souple 20' est rattachée à chacun desdits bords d'extrémité libre droits 14a, 15a et présente un profil en angle droit avec une première partie 20'a qui s'étend dans le prolongement de l'aile latérale longitudinale 12, 13 correspondante et une deuxième partie 20'b s'étendant à l'équerre de ladite première partie 20'a sensiblement parallèlement au fond 11 du socle en direction de l'autre paroi souple 20'.

A la jonction entre la première partie 20'a et la deuxième partie 20'b de chaque paroi souple 20', il est prévu un décrochement 25' identique au décrochement 25 précédemment décrit.

Ce décrochement 25' permet d'augmenter la capacité de câblage du socle 10 en élevant légèrement chaque deuxième partie 20'b plane de chaque paroi souple 20 au-dessus du plan de l'ouverture longitudinale 10a du socle 10.

La deuxième partie 20'b de chaque paroi souple 20' est identique à la partie plane de la paroi souple 20 représentée par exemple sur la figure 7 avec un bord libre 21' qui suit un trajet sinusoïdal. Chaque deuxième partie 20'b de chaque paroi souple 20' s'étend ici en continu le long de la première partie 20'a de chaque paroi souple 20'.

Bien entendu, selon une variante de réalisation, on peut prévoir que le bord libre 21' de la deuxième partie 20'b de chaque paroi souple 20' suit un trajet rectiligne ou en créneaux. Il est également possible d'avoir une seule paroi souple 20' sur une seule aile latérale du socle de la goulotte et rien sur l'autre aile latérale.

Il est prévu, entre les deux bords libres 21' des deux parois souples 20' en regard, un interstice 22 permettant le chargement aisé du socle 10 en câbles ou conducteurs électriques.

En outre, le socle 10 représenté sur les figures 11 et 12 comporte, dans chacune des faces externes des ailes latérales longitudinales 12, 13 rigides, une gorge longitudinale 16, 17 pour le montage du couvercle de fermeture 30 (voir figure 12).

Selon le mode de réalisation représenté sur la figure 10, une des ailes latérales longitudinales 12 du socle 10 est exempte de retour en équerre et se termine par un bord d'extrémité droit 14a alors que l'autre aile latérale longitudinale 13 présente un retour en équerre 15 dirigé vers l'autre aile latérale longitudinale 12.

Dans ce cas, les parois souples 20', 20, portées par les deux ailes latérales longitudinales 12, 13 du socle 10, sont différentes, l'une des parois souples 20', rattachée au bord d'extrémité libre droit 14a de l'aile latérale longitudinale 12 correspondante, présentant un profil en angle droit et étant identique à la paroi souple 20' décrite en référence à la figure 11, alors que l'autre paroi souple 20, rattachée au bord 15a du retour en équerre 15 de l'autre aile latérale longitudinale 13, est identique à la paroi souple 20 décrite en référence à la figure 7.

Chaque paroi souple 20, 20' présente ici également un bord libre qui suit un trajet sinusoïdal, un interstice 22 étant laissé entre les deux bords libres 21, 21'.

Selon le mode de réalisation représenté sur la figure 2, chaque paroi souple 20 est rapportée sur le bord 14a, 15a de l'aile latérale longitudinale 12, 13 correspondante du socle 10 par l'intermédiaire de moyens de montage mécanique. Ici, chaque paroi souple 20 est rapportée par emmanchement sur le bord de l'aile latérale correspondante du socle.

A cet effet, il est prévu, au dos de chaque gorge longitudinale 16, 17 formée par le retour en équerre 14, 15 correspondant de l'aile latérale longitudinale 12, 13 correspondante, une languette rigide 14'a, 15'a qui vient s'emmancher dans une gorge longitudinale 23 prévue à la base du décrochement 25 de la paroi souple 20 correspondante.

Bien entendu, selon d'autres variantes de réalisation non représentées, on peut prévoir que chaque paroi souple soit rapportée par encliquetage sur le bord de l'aile latérale correspondante du socle ou encore par rivetage, par vissage, par agrafage, par collage, par soudage ou par tout autre moyen de solidarisation.

Selon les modes de réalisation représentés sur les figures 1, 3, 4 à 14, chaque paroi souple 20, 20' vient de formation par moulage avec le socle 10.

Avantageusement, chaque paroi souple 20, 20' et le socle 10 sont réalisés d'un seul tenant par co-extrusion d'une matière rigide constituant le socle 10 et d'une matière souple constituant chaque paroi souple 20, 20'. C'est le cas des modes de réalisation représentés sur les figures 1, 3 à 8 et 10 à 14.

D'ailleurs, comme le montrent plus particulièrement les figures 10 à 14, à la jonction de chaque paroi souple 20, 20' et de chaque aile latérale longitudinale 12, 13 ou de la cloison de séparation 12', il apparaît une ligne 24 de changement de matière.

La matière souple qui constitue chaque paroi souple 20, 20' est avantageusement du type PVC souple ou élastomère synthétique ou naturel.

On peut également prévoir de réaliser les parois souples et le socle par moulage d'un élastomère thermoplastique dont la dureté est égale à environ 80/90 shores A pour le socle rigide et est égale à environ 60 shores A pour les parois souples.

Selon le mode de réalisation représenté sur la figure 9, chaque paroi souple 20 et le socle 10 sont réalisés par moulage de la matière rigide constituant le socle, la souplesse de chaque paroi souple étant obtenue par exemple par découpage de celle-ci, après moulage, en une pluralité de languettes 20a juxtaposées selon la direction longitudinale X de ladite paroi souple 20.

Entre deux languettes 20a successives, il est prévu un interstice 20b relativement conséquent pour que l'ensemble des languettes soit relativement souple. Le bord 21 des extrémités des languettes 20a est ici droit mais peut également suivre un trajet sinusoïdal ou en créneaux.

Ainsi, l'installateur charge les socles 10 représentés sur les différentes figures en introduisant les câbles ou conducteurs électriques à l'intérieur de l'interstice défini entre les parois souples et en prenant appui sur les parois souples 20 qui se déforment élastiquement pour faciliter le passage des câbles ou des conducteurs électriques. Chaque paroi souple 20 revient à son état d'équilibre après que le câble ou le conducteur électrique ait été introduit à l'intérieur du socle 10.

L'installateur n'a donc plus besoin d'écarter d'une main un accessoire de retenue et de passer de l'autre les câbles ou conducteurs électriques à l'intérieur du socle de la goulotte.

De plus, la souplesse des parois souples 20 permet d'éviter le risque de blessure des doigts de l'installateur. Une fois que le socle 10 de la goulotte électrique est chargé, les parois souples 20 jouent leur rôle de moyens de retenue des câbles ou conducteurs électriques à l'intérieur dudit socle en ayant une élasticité adaptée pour ne pas être ni trop souples ni trop dures.

Enfin, le couvercle de fermeture 30, lorsqu'il est rapporté sur le socle 10 de la goulotte électrique, assure une sécurité d'accès à l'intérieur du socle en se superposant aux moyens de retenue 20, 20'.

En particulier, on pourra prévoir que chaque paroi souple présente un bord libre suivant un trajet en créneaux.

On pourra prévoir que chaque paroi souple, rattachée à un retour en équerre de l'aile latérale longitudinale correspondante du socle, s'étend entièrement parallèlement au fond du socle, c'est-à-dire qu'elle ne comprend pas de décrochement au niveau de son rattachement audit retour en équerre.

On pourra prévoir que les parois souples sont réalisées en matière transparente pour permettre à l'installateur de visualiser plus facilement l'intérieur du socle de goulotte.

On pourra également prévoir que chaque paroi souple est munie sur son bord libre de moyens d'accrochage sur l'autre aile latérale longitudinale du socle de la goulotte de sorte que l'installateur peut la verrouiller sur ladite aile latérale après avoir terminé le remplissage en câbles ou conducteurs électriques du socle.

## Revendications

1. Goulotte électrique comprenant un socle (10) pourvu d'au moins une ouverture longitudinale (10a) définie entre les bords (14a, 15a) de deux ailes latérales longitudinales (12, 13) ou d'une aile latérale longitudinale (12, 13) et d'une cloison de séparation (12') ou encore de deux cloisons de séparation qui s'élèvent à partir d'un fond (11), des moyens de retenue (20) de câbles ou de conducteurs électriques positionnés à l'intérieur dudit socle (10) et un couvercle de fermeture (30) destiné à être monté sur le socle (10) en recouvrant lesdits moyens de retenue (20) pour fermer chaque ouverture longitudinale (10a), **caractérisée en ce que** lesdits moyens de retenue comprennent au moins une paroi souple (20), qui court le long du bord (15a ; 12'a) d'une desdites ailes latérales (13) ou d'une cloison de séparation (12') du socle (10), et qui s'étend au moins en partie sensiblement parallèlement au fond (11) dudit socle (10) en direction de l'autre aile latérale (12) ou de l'autre cloison de séparation pour couvrir au moins partiellement chaque ouverture longitudinale (10a) du socle (10).

2. Goulotte selon la revendication 1, **caractérisée en ce que** chaque paroi souple (20) est continue le long du bord (14a, 15a ; 12'a) de l'aile latérale (12, 13) ou de la cloison de séparation (12') correspondante dudit socle (10).

3. Goulotte selon la revendication 1, **caractérisée en ce que** chaque paroi souple (20) est interrompue à des endroits répartis le long du bord (14a, 15a) de l'aile latérale (12, 13) ou de la cloison de séparation correspondante dudit socle (10).

4. Goulotte selon l'une des revendications 1 à 3, **caractérisée en ce que** chaque paroi souple (20) présente un bord libre (21) qui suit un trajet sinusoïdal.

5. Goulotte selon l'une des revendications 1 à 3, **caractérisée en ce que** chaque paroi souple (20) présente un bord libre (21) qui suit un trajet rectiligne.

6. Goulotte selon la revendication 5, **caractérisée en ce que** chaque paroi souple (20) présente un bord libre (21) recourbé vers l'intérieur du socle (10) pour former un crochet longitudinal.

7. Goulotte selon l'une des revendications 1 à 3, **caractérisée en ce que** chaque paroi souple présente un bord libre qui suit un trajet en créneaux.

8. Goulotte selon l'une des revendications 1 à 7 , **caractérisée en ce que** le socle (10) comprend au moins une cloison de séparation (12') qui porte, le long de deux bords (12'a) parallèles, deux parois souples (20) qui s'étendent sensiblement parallèlement au fond (11) du socle (10) dans des directions opposées l'une de l'autre.

9. Goulotte selon l'une des revendications 1 à 8, **caractérisée en ce que** chaque paroi souple (20) est rattachée à un retour en équerre (14, 15 ; 12") de l'aile latérale (12, 13) ou de la cloison de séparation (12') correspondante dudit socle (10) et s'étend pratiquement entièrement parallèlement au fond (11) du socle (10).

10. Goulotte selon l'une des revendications 1 à 8 , **caractérisé en ce que**, l'aile latérale (12, 13) ou la cloison de séparation correspondante dudit socle (10) étant exempte de retour en équerre et se terminant par un bord d'extrémité libre droit (14a, 15a), chaque paroi souple (20') est rattachée audit bord d'extrémité libre droit (14a, 15a).

11. Goulotte selon la revendication 10, **caractérisée en ce que** chaque paroi souple (20') présente un profil en angle droit avec une première partie (20'a) s'étendant dans le prolongement de ladite aile latérale (12, 13) ou de ladite cloison de séparation et une deuxième partie (20'b) s'étendant à l'équerre de ladite première partie (20'a) parallèlement au fond (11) du socle (10).

12. Goulotte selon l'une des revendications précédentes, **caractérisée en ce que** les moyens de retenue comprennent deux parois souples (20) en regard, chacune courant le long du bord (14a, 15a) d'une desdites ailes latérales (12, 13) du socle (10) et s'étendant au moins en partie sensiblement parallèlement au fond (11) dudit socle (10) en direction de l'autre paroi souple (20) pour couvrir partiellement ladite ouverture longitudinale (10a) du socle, un interstice (22) étant prévu entre les deux bords libres (21) desdites parois souples (20).

13. Goulotte selon la revendication 12, **caractérisée en ce que** les deux parois souples (20) sont identiques.

14. Goulotte selon la revendication 12, **caractérisée en ce que** les deux parois souples (20, 20') sont différentes.

15. Goulotte selon l'une des revendications 1 à 14, **caractérisée en ce que** chaque paroi souple (20, 20') vient de formation par moulage avec le socle.

16. Goulotte selon la revendication 15, **caractérisée en ce que** chaque paroi souple (20, 20') et le socle (10) sont réalisés d'un seul tenant par co-extrusion d'une matière rigide constituant le socle (10) et d'une matière souple constituant chaque paroi souple (20, 20').

17. Goulotte selon l'une des revendications 1 à 14, **caractérisée en ce que** chaque paroi souple (20) est rapportée sur le bord de l'aile latérale ou de la cloison de séparation correspondante du socle par l'intermédiaire de moyens de montage mécanique.

18. Goulotte selon la revendication 17, **caractérisée en ce que** chaque paroi souple est rapportée par encliquetage sur le bord de l'aile latérale ou de la cloison de séparation correspondante du socle.

19. Goulotte selon la revendication 17, **caractérisée en ce que** chaque paroi souple (20) est rapportée par emmanchement sur le bord de l'aile latérale ou de la cloison de séparation correspondante du socle.

20. Goulotte selon l'une des revendications 1 à 14, **caractérisée en ce que** chaque paroi souple est rapportée par collage sur le bord de l'aile latérale ou de la cloison de séparation correspondante du socle.

21. Goulotte selon l'une des revendications 1 à 14, **caractérisée en ce que** chaque paroi souple est soudée au bord de l'aile latérale ou de la cloison de séparation correspondante du socle.

22. Goulotte selon la revendication 15, **caractérisée en ce que** chaque paroi souple (20) et le socle (10) sont réalisés par moulage d'une matière rigide, la souplesse de chaque paroi souple étant obtenue par découpage de celle-ci en une pluralité de languettes (20a) juxtaposées selon la direction longitudinale de ladite paroi souple (20).

23. Goulotte selon l'une des revendications 1 à 22, **caractérisée en ce que** chaque paroi souple (20) est réalisée en une matière souple du type PVC souple ou élastomère synthétique ou naturel

24. Goulotte selon l'une des revendications précédentes, **caractérisée en ce que** chaque paroi souple (20) est réalisée en une matière transparente.

25. Goulotte selon l'une des revendications précédentes, **caractérisée en ce que** chaque paroi souple (20) comporte, sur son bord libre (21), des moyens d'accrochage sur le bord de l'autre aile latérale longitudinale ou de l'autre cloison de séparation du socle pour être verrouillée.

## Patentansprüche

1. Kabelkanal mit einem Sockel (10), der mit wenigstens einer Längsöffnung (10a) versehen ist, die zwischen den Rändern (14a, 15a) von zwei Seitenlängsschenkeln (12, 13) oder einem Seitenlängsschenkel (12, 13) und einer Trennwand (12') oder auch von zwei sich vom Boden (11) aus erhebenden Trennwänden ausgebildet ist, Mitteln (20) zum Halten der Kabel oder elektrischen Leitungen, die innen im Sockel (10) platziert sind, und einem Verschlussdeckel (30), der zur Anbringung auf dem Sockel (10) bestimmt ist und dabei die Haltemittel (20) verdeckt, um jede Längsöffnung (10a) zu verschließen,
**dadurch gekennzeichnet, dass** die Haltemittel wenigstens eine flexible Wand (20) aufweisen, die entlang des Rands (15a; 12'a) eines der Seitenschenkels (13) oder einer Trennwand (12') des Sockels (10) verläuft und die sich wenigstens zum Teil im Wesentlichen parallel zum Boden (11) des Sockels (10) in Richtung des anderen Seitenschenkels (12) oder der andere Trennwand erstreckt, um jede Längsöffnung (10a) des Sockels (10) wenigstens zum Teil zu verdecken.

2. Kabelkanal nach Anspruch 1,
**dadurch gekennzeichnet, dass** jede flexible Wand (20) entlang des Rands (14a, 15a; 12'a) des Seitenschenkels (12, 13) oder der jeweiligen Trennwand (12') des Sockels (10) kontinuierlich verläuft.

3. Kabelkanal nach Anspruch 1,
**dadurch gekennzeichnet, dass** jede flexible Wand (20) an über den Rand (14a, 15a) des Seitenschenkels (12, 13) oder der jeweiligen Trennwand des Sockels (10) verteilten Stellen unterbrochen ist.

4. Kabelkanal nach einem der Ansprüche 1 bis 3,
**dadurch gekennzeichnet, dass** jede flexible Wand (20) einen freien Rand (21) aufweist, dessen Verlauf sinusförmig ist.

5. Kabelkanal nach einem der Ansprüche 1 bis 3,
**dadurch gekennzeichnet, dass** jede flexible Wand (20) einen freien Rand (21) aufweist, dessen Verlauf gerade ist.

6. Kabelkanal nach Anspruch 5,
**dadurch gekennzeichnet, dass** jede flexible Wand (20) einen freien Rand (21) aufweist, der zur Innenseite des Sockels (10) gebogen ist, um einen Längshaken zu bilden.

7. Kabelkanal nach einem der Ansprüche 1 bis 3,
**dadurch gekennzeichnet, dass** jede flexible Wand einen freien Rand aufweist, dessen Verlauf gezackt ist.

8. Kabelkanal nach einem der Ansprüche 1 bis 7,
**dadurch gekennzeichnet, dass** der Sockel (10) wenigstens eine Trennwand (12') umfasst, die entlang von zwei zueinander parallelen Rändern (12'a) mit zwei flexiblen Wänden (20) versehen ist, die im Wesentlichen parallel zum Boden (11) des Sockels (10) in entgegengesetzten Richtungen verlaufen.

9. Kabelkanal nach einem der Ansprüche 1 bis 8,
**dadurch gekennzeichnet, dass** jede flexible Wand (20) mit einer rechtwinkligen Abwinklung (14, 15; 12") des Seitenschenkels (12, 13) oder der jeweiligen Trennwand (12') des Sockels (10) verbunden ist und sich praktisch vollständig parallel zum Boden (11) des Sockels (10) erstreckt.

10. Kabelkanal nach einem der Ansprüche 1 bis 8,
**dadurch gekennzeichnet, dass** jede flexible Wand (20'), wenn der Seitenschenkel (12, 13) oder die jeweilige Trennwand des Sockels (10) keine rechtwinklige Abwinklung aufweist und in einem geraden freien Endrand (14a, 15a) endet, mit diesem geraden freien Endrand (14a, 15a) verbunden ist.

11. Kabelkanal nach Anspruch 10,
**dadurch gekennzeichnet, dass** jede flexible Wand (20') ein rechtwinkliges Profil aufweist, wobei ein erster Teil (20'a) in Verlängerung des Seitenschenkels (12, 13) oder der Trennwand verläuft und ein zweiter Teil (20'b) rechtwinklig zu dem ersten Teil (20'a) parallel zum Boden (11) des Sockels (10) verläuft.

12. Kabelkanal nach einem der vorhergehenden Ansprüche,
**dadurch gekennzeichnet, dass** die Haltemittel zwei sich zugewandte flexible Wände (20) aufweisen, wobei jede entlang des Rands (14a, 15a) eines der Seitenschenkels (12, 13) des Sockels (10) verläuft und sich wenigstens zum Teil im Wesentlichen parallel zum Boden (11) des Sockels (10) in Richtung zu der anderen flexiblen Wand (20) erstreckt, um die Längsöffnung (10a) des Sockels teilweise zu verdecken, wobei zwischen den beiden freien Rändern (21) der flexiblen Wände (20) ein Spalt (22) vorgesehen ist.

13. Kabelkanal nach Anspruch 12,
**dadurch gekennzeichnet, dass** die beiden flexiblen Wände (20) identisch sind.

14. Kabelkanal nach Anspruch 12,
**dadurch gekennzeichnet, dass** die beiden flexiblen Wände (20, 20') verschieden sind.

15. Kabelkanal nach einem der Ansprüche 1 bis 14,
**dadurch gekennzeichnet, dass** jede flexible Wand (20, 20') durch Formguss einstückig mit dem Sockel angeformt ist.

16. Kabelkanal nach Anspruch 15,
**dadurch gekennzeichnet, dass** jede flexible Wand (20, 20') und der Sockel (10) einstückig durch Co-Extrusion eines den Sockel (10) bildenden starren Materials und eines jede flexible Wand (20, 20') bildenden weichen Materials ausgeführt sind.

17. Kabelkanal nach einem der Ansprüche 1 bis 14,
**dadurch gekennzeichnet, dass** jede flexible Wand (20) auf den Rand des Seitenschenkels oder der jeweiligen Trennwand des Sockels mithilfe von mechanischen Montagemitteln aufgesetzt ist.

18. Kabelkanal nach Anspruch 17,
**dadurch gekennzeichnet, dass** jede flexible Wand auf den Rand des Seitenschenkels oder der jeweiligen Trennwand des Sockels durch Einrasten aufgesetzt ist.

19. Kabelkanal nach Anspruch 17,
**dadurch gekennzeichnet, dass** jede flexible Wand (20) auf den Rand des Seitenschenkels oder der jeweiligen Trennwand des Sockels durch Aufstecken aufgesetzt ist.

20. Kabelkanal nach einem der Ansprüche 1 bis 14,
**dadurch gekennzeichnet, dass** jede flexible Wand auf den Rand des Seitenschenkels oder der jeweiligen Trennwand des Sockels durch Kleben aufgesetzt ist.

21. Kabelkanal nach einem der Ansprüche 1 bis 14,
**dadurch gekennzeichnet, dass** jede flexible Wand an dem Rand des Seitenschenkels oder der jeweiligen Trennwand des Sockels angeschweißt ist.

22. Kabelkanal nach Anspruch 15,
**dadurch gekennzeichnet, dass** jede flexible Wand (20) und der Sockel (10) durch Formguss eines starren Materials ausgeführt sind, wobei die Elastizität jeder flexiblen Wand dadurch erreicht wird, dass in diese eine Vielzahl von Zungen (20a) eingeschnitten sind, die in der Längsrichtung der flexiblen Wand (20) nebeneinanderliegen.

23. Kabelkanal nach einem der Ansprüche 1 bis 22,
**dadurch gekennzeichnet, dass** jede flexible Wand (20) aus einem weichen Material vom Typ Weich-PVC oder synthetisches oder natürliches Elastomer besteht.

24. Kabelkanal nach einem der vorhergehenden Ansprüche,
**dadurch gekennzeichnet, dass** jede flexible Wand (20) aus einem durchsichtigen Material besteht.

25. Kabelkanal nach einem der vorhergehenden Ansprüche,
**dadurch gekennzeichnet, dass** jede flexible Wand (20) an ihrem freien Rand (21) Mittel zum Verhaken mit dem Rand des anderen Seitenlängsschenkels oder der anderen Trennwand des Sockels zu ihrer Verriegelung aufweist.

## Claims

1. Electric trunking comprising a base (10) provided with at least one longitudinal opening (10a) defined between the edges (14a, 15a) of two longitudinal lateral flanges (12, 13) or of one longitudinal lateral flange (12, 13) and a separating partition (12') or else of two separating partitions which rise from a back portion (11), retaining means (20) for electric conductors or cables positioned inside said base (10) and a closing cover (30) adapted to be mounted on the base (10) while covering said retaining means (20) to close each longitudinal opening (10a), **characterized in that** said retaining means comprise at least one flexible wall (20), which runs the length of the edge (15a ; 12'a) of one of said lateral flanges (13) or of a separating partition (12') of the base (10), and which extends at least in part substantially parallel to the back portion (11) of said base (10) towards the other lateral flange (12) or the other separating partition to cover each longitudinal opening (10a) of the base (10) at least partially.

2. Trunking according to claim 1, **characterized in that** each flexible wall (20) is continuous along the edge (14a, 15a ; 12'a) of the lateral flange (12, 13) or of the corresponding separating partition (12') of said base (10).

3. Trunking according to claim 1, **characterized in that** each flexible wall (20) is interrupted at locations distributed along the edge (14a, 15a) of the lateral flange (12, 13) or of the corresponding separating partition of said base (10).

4. Trunking according to one of claims 1 to 3, **characterized in that** each flexible wall (20) has a free edge (21) which follows a sinusoidal path.

5. Trunking according to one of claims 1 to 3, **characterized in that** each flexible wall (20) has a free edge (21) which follows a rectilinear path.

6. Trunking according to claim 5, **characterized in that** each flexible wall (20) has a free edge (21) curved towards the inside of the base (10) to form a longitudinal hook.

7. Trunking according to one of claims 1 to 3, **characterized in that** each flexible wall has a free edge which follows a crenellated path.

8. Trunking according to one of claims 1 to 7, **characterized in that** the base (10) comprises at least one separating partition (12') which bears, along two parallel edges (12'a), two flexible walls (20) which extend substantially parallel to the back portion (11) of the base (10) in opposite directions to each other.

9. Trunking according to one of claims 1 to 8, **characterized in that** each flexible wall (20) is attached to an L-shaped bend-forming portion (14, 15; 12") of the lateral flange (12, 13) or of the corresponding separating partition (12') of said base (10) and extends almost entirely parallel to the back portion (11) of the base (10).

10. Trunking according to one of claims 1 to 8, **characterized in that**, the lateral flange (12, 13) or the corresponding separating partition of said base (10) being free of any L-shaped bend-forming portion and terminating with a straight free terminating edge (14a, 15a), each flexible wall (20') is joined to said straight free terminating edge (14a, 15a).

11. Trunking according to claim 10, **characterized in that** each flexible wall (20') has a right-angled profile with a first part (20'a) extending in line with said lateral flange (12, 13) or with said separating partition and a second part (20'b) extending perpendicular to said first part (20'a) and parallel to the back portion (11) of the base (10).

12. Trunking according to one of the preceding claims, **characterized in that** the retaining means comprise two flexible walls (20) facing each other, each running along the edge (14a, 15a) of one of said lateral flanges (12, 13) of the base (10) and extending at least in part substantially parallel to the back portion (11) of said base (10) towards the other flexible wall (20) to partially cover said longitudinal opening (10a) of the base, an interstice (22) being provided between the two free edges (21) of said flexible walls (20).

13. Trunking according to claim 12, **characterized in that** the two flexible walls (20) are identical.

14. Trunking according to claim 12, **characterized in that** the two flexible walls (20, 20') are different.

15. Trunking according to one of claims 1 to 14, **characterized in that** each flexible wall (20, 20') is formed with the base by molding.

16. Trunking according to claim 15, **characterized in that** each flexible wall (20, 20') and the base (10) are formed as a single piece by co-extrusion of a rigid material constituting the base (10) and of a flexible material constituting each flexible wall (20, 20').

17. Trunking according to one of claims 1 to 14, **characterized in that** each flexible wall (20) is mounted on the edge of the lateral flange or of the corresponding separating partition of the base via mechanical mounting means.

18. Trunking according to claim 17, **characterized in that** each flexible wall is mounted by snap engagement on the edge of the lateral flange or of the corresponding separating partition of the base.

19. Trunking according to claim 17, **characterized in that** each flexible wall (20) is mounted on the edge of the lateral flange or of the corresponding separating partition of the base by insertion.

20. Trunking according to one of claims 1 to 14, **characterized in that** each flexible wall is mounted by bonding on the edge of the lateral flange or of the corresponding separating partition of the base.

21. Trunking according to one of claims 1 to 14, **characterized in that** each flexible wall is welded to the edge of the lateral flange or of the corresponding separating partition of the base.

22. Trunking according to claim 15, **characterized in that** each flexible wall (20) and the base (10) are formed by molding from a rigid material, the flexibility of each flexible wall being obtained by cutting up the latter into a plurality of tabs (20a) juxtaposed in the longitudinal direction of said flexible wall (20).

23. Trunking according to one of claims 1 to 22, **characterized in that** each flexible wall (20) is formed from a flexible material of the flexible PVC or natural or synthetic elastomer type.

24. Trunking according to one of the preceding claims, **characterized in that** each flexible wall (20) is formed from a transparent material.

25. Trunking according to one of the preceding claims, **characterized in that** each flexible wall (20) comprises, on its free edge (21), means for hooking onto the edge of the other longitudinal lateral flange or of the other separating partition of the base to be locked.
